# EUROPEAN PATENT APPLICATION

(11) **EP 3 929 848 A1**
(43) Date of publication of application: **29.12.2021**
(21) Application number: 20181449.8
(22) Date of filing: 22.06.2020
(51) Int. Cl.: G06Q 20/32, G06Q 20/02, G06Q 20/12, G06Q 20/16, G06Q 20/40, G06Q 20/42

(54) **LATERPAY 5G SECONDARY AUTHENTICATION**

(71) Applicant: Laterpay AG, 6312 Steinhausen (CH)
(72) Inventor: Cosmin-Gabriel, Ene, 80469 München (DE); Martin, Hans, 31 162 Bad Salzdetfurth (DE)
(74) Representative: Würmser, Julian

(57) **Abstract**

Providing a method for providing paid access to online content, the method comprising: a) sending, by a user equipment (101), a signal requesting the online content from a content provider (120), preferably a web server (121) of the content provider (120); b) receiving, by the user equipment (101), a response signal with an address of a payment system (130);, it is an objective of the present invention to provide a content payment authentication with improved reliability without a need for prior payment system registration. The objective is achieved by c) sending, by the user equipment, first session request signal, preferably a PDU session setup request signal, requesting a communication session, preferably a PDU session, with the payment system (130); d) determining, by a policy function (117), preferably by a Policy Control Function of a public land mobile network (110) of the user equipment (101), an address of an authentication server (131) based on the address of the payment system (130), the authentication server preferably being a secondary authentication server and/or an AAA server, preferably remote from the public land mobile network (110); e) determining, by a core network managing function (140), a persistent ID of the user equipment (101) and providing the persistent ID to the authentication server (131) in a second session request signal (228), preferably in a SMF/AAA Session Request signal; f) determining, by the authentication server (131), the authenticity of the user equipment (101) using the persistent ID; g) determining, by the payment system (130), based on the persistent ID, a payment status of the user equipment (101) for the online content; and h) enabling at least one user option, preferably via a first session established in response to the first session request signal, at the user equipment (101) for the online content, based on the payment status, preferably at least one option to gain access to the online content, to pay for the online content, and/or to donate money to the content provider (120).

## Description

The invention relates to secondary authentication of online content access according to claims 1, 13, 14, and 15.

### Payment systems

For online shopping, various possibilities exist to pay for ordered goods. Online shops often request new users to register with their real name and email address. During the shopping process, the mail address for shipping non-digital goods and credit card information is requested before a purchase is finally accepted by the online-shop. For digital goods like audio or video media data, the process is very much the same without the mailing address.

Alternatives to providing a credit card are various other types of bank accounts. Another alternative is to transfer money to the online shop via bitcoins, the worldwide virtual currency.

There are payment systems established that offer a payment service to shops and customers that have benefits over the simple registration described above. Some services include a registration only at the payment service, usually trusted by customers. These services require an email address to be provided to the online shop or not even that. The shop then requests settlement of a bill from the payment service and based on the mail address or even anonymous for the shop and after a login of the customer at the payment service, the payment service finally provides the registered shipping address to the online shop.

These and other payment service have in common, that they require not only an agreement to pay before the purchase is actually finalized, but already the payment to have taken place. For digital goods this means, the credit card is debited or the payment service transfers the purchase amount to the online shop before the digital data is delivered to the customer.

### Laterpay

An exception of this basic mechanism is introduced in WO 2011/029560 (A2). The patent application describes a payment system and methods for a plurality of payment processes. The solution is further described on https://www2.laterpay.net, and will further be referenced as LaterPay functionality. The system and methods are invoked for a buyer system making a purchase in an online shop for a certain purchase amount. The system:
- stores an identification number of the buyer system,
- stores the purchase amount in relation to the identification number,
- monitors the total amount of purchases of the buyer system,
- receives a request from the online shop to account for the purchase amount, and
- sends a request for settlement of at least a part of the total amount of purchases to a user of the buyer system only when the total amount of purchases exceeds a predefined value and/or after the expiry of a predefined time interval.

Simplified, the patent application describes a system that allows a buyer to make purchases online with a buyer system for a purchase amount which the buyer firstly does not have to settle. The payment system accumulates the amounts of purchases from the buyer system and only when the total amount of due payments exceeds a predefined value, the buyer is requested to settle the total amount or a part of it. The buyer system can be a PC or a mobile phone or the like. The purchases and purchase amounts are stored by the payment system in relation to a buyer system identification which does not include an identification of the buyer nor does it need a registration or any other user interaction. In absence of a user login or any other user identification, the system depends on a reliable identification of the buyer system, e.g. the mobile phone in combination with the used browser. This identification is getting more difficult as modern operating systems have means implemented to prevent user tracking and thus also user identification.

### 5G Secondary Authentication

The next generation mobile communication system, often referred to as 5G, offers a broad variety of new features. The architecture of the 5G system is described in [3GPP TS 23.501]. A Public Land Mobile Network (PLMN) based on the 5G architecture comprises a core network providing services to user equipment (UE) devices and to service providers outside the PLMN. The UE devices access the core network via one or more access networks which can be either the 5G New Radio access network, a legacy mobile radio network like LTE or UMTS, or a wire-line or Wireless LAN access network. UE devices accessing the core network are authenticated based on a shared secret stored in a subscriber data base of the PLMN and on the Subscriber Identification Module (SIM or USIM) of the UE device.

Recently, a new type of network was developed which is also based on a core network and one or more access networks, but that is not a public network (PLMN), but a Non-Public Network (NPN) that usually serves a specific purpose, e.g. the communication of humans and machines in an industrial plant. An NPN can apply an authentication mechanism that is different from that of a PLMN in that it may use other credentials than those typically stored on a USIM, e.g. certificates stored in the non-volatile memory. In this invention, we use the term PLMN for any kind of network, public or non-public and regardless of the credentials used for (primary) authentication.

One of the new features of the 5G system is the secondary authentication/authorization by a AAA server outside the PLMN. The feature allows a service provider outside the PLMN to authenticate and/or authorize a connection of a UE device to the service provider network. For that purpose, the PLMN has a policy storage that has a service provider specific policy stored which indicates that a secondary authentication and/or authorization is required for a connection to the service provider network. When a UE device requests from the PLMN a connection to the service provider network, a session management function (SMF) in the PLMN looks up the policy and determines the respective requirement.

If secondary authentication is required, the UE devices needs to provide to the SMF authentication information e.g. a subscriber identification that is used with the service provider, i.e. a user name, and respective credentials. This may be done in a request by the UE device for a connection to the service provider network. Alternatively, this may be initiated by the SMF following the reception of such connection request from the UE device. The SMF then serves as an EAP authenticator and transmits an EAP request requesting the credentials to be sent subsequently by the UE device. Either way, the UE device provides credentials to the SMF as part of the requested connection setup to the service provider network. These are then passed by the SMF to a AAA server of the service provider network, which is known by the SMF. Based on this information, the AAA server will authenticate the UE device and reply to the SMF with a result. The connection is only set up, if the authentication was successful. The mechanism has several advantages, one being that a connection setup is prevented, if a UE device cannot authenticate with the service provider so that resources and activities of the PLMN are saved in that case.

If only authorization is required, the UE device may omit any authentication information and the SMF may provide a Generic Public Subscription Identifier (GPSI), e.g. a Mobile Station International Subscriber Directory Number (MSISDN), or any other persistent identification, to the AAA server to identify the subscriber of the UE device. Based on the GPSI, the AAA server of the service provider network will provide the SMF with authorization data, i.e. whether or not the UE device should be allowed to establish the requested connection and further attributes of the connection, e.g. QoS information.

Any combination of the above described authentication and authorization may be used. The UE device may provide authentication information and the SMF may pass this information together with an additional GPSI to the AAA server and the determination, whether the UE device is allowed to access the service offered by the provider, may be based on the GPSI, on a UE device subscriber identification and/or a password or a certificate or the like. The details of the secondary authentication are described in [3GPP TS 23.501 §5.6.6].

The mentioned Extensible Authentication Protocol (EAP) is specified in IETF RFC 3748, it defines some of the messages and message exchanges used throughout this invention disclosure.

Known web-based payment systems are either based on a user authentication involving user interaction and a registration or they are based on an automatic and unreliable buyer system identification to account for pay content.

Prior art is lacking a payment system that reliably identifies the user of a device without any user interaction or pre-registration and that allows a user to purchase and consume digital content with a minimum of user interaction while ensuring a fee for the content is reliably accounted.

The current invention uses an amended secondary authentication. The secondary authentication/authorization as defined in the 5G system architecture is enhanced so that together with a payment service provider network it builds a payment system that overcomes the described lack of the prior art.

WO 2018/137873 (A1) describes a user equipment device receiving an EAP request from an SMF for secondary authentication of the UE device. The UE device replies with an EAP response. The secondary authentication is authentication of the UE device in addition to primary authentication. The patent application at most describes the basic mechanism currently specified for 5G secondary authentication.

### Summary

The objectives of the present invention are achieved by the subject-matter of claim 1, 13, 14, and 15. In particular, the deficiencies are achieved by a method for providing paid access to online content, the method comprising:
a) sending, by a user equipment, a signal requesting the online content from a content provider, preferably a web server of the content provider;
b) receiving, by the user equipment, a response signal with an address of a payment system;
c) sending, by the user equipment, first session request signal, preferably a PDU session setup request signal, requesting a communication session, preferably a PDU session, with the payment system;
d) determining, by a policy function, preferably by a Policy Control Function of a public land mobile network of the user equipment, an address of an authentication server based on the address of the payment system, the authentication server preferably being a secondary authentication server and/or an AAA server, preferably remote from the public land mobile network;
e) determining, by a core network managing function, a persistent ID of the user equipment and providing the persistent ID to the authentication server in a second session request signal, preferably in a SMF/AAA Session Request signal;
f) determining, by the authentication server, the authenticity of the user equipment using the persistent ID;
g) determining, by the payment system, based on the persistent ID, a payment status of the user equipment for the online content; and
h) enabling at least one user option, preferably via a first session established in response to the first session request signal, at the user equipment for the online content, based on the payment status, preferably at least one option to gain access to the online content, to pay for the online content, and/or to donate money to the content provider.

Advantages include a content payment authentication with improved reliability without a need for prior payment system registration.

In one embodiment, step b) further includes receiving a security token by the user equipment from a/the web server of the content provider; wherein step e) further includes providing the authentication server with the security token as secondary authentication credentials; and wherein step f) includes authenticate, by the authentication server, the content provider and/or the web server, using the security token.

In one embodiment, step b) includes receiving from a/the web server of the content provider, by the user equipment, a script embedded in a web page, the script including an identification of the online content and instructions to set up the first session with the address of the payment system; wherein the user equipment connected to a/the public land mobile network comprising a 5G core network is connected via the public land mobile network to the web server; and wherein the script, when executed on the user equipment, downloads information and further executable code from a payment server of the payment system.

In one embodiment, the script comprises information for accessing the online content that is only presented on the user equipment if the payment system determines that the online content has already been purchased, and otherwise presents purchase options on the user equipment; and wherein when rendering the web page of the content provider including the code, the user equipment will either immediately or after user interaction, establish a connection to the payment system for download of the information and the further code.

In one embodiment, the user equipment receives a web session identification embedded in a web page from a/the web server of the content provider and some of the downloaded information, such as content that provides access to pay content, is not immediately presented to the user.

In one embodiment, a/the public land mobile network is aware of the payment system, such as through a service level agreement between an operator of the public land mobile network and an operator of the payment system; and wherein the 5G core network has a policy storage data base attached to the policy function in which one or more policies related to the payment system are stored.

In one embodiment, step g) includes determining, by the payment system, if the user equipment has paid for the online content based on the persistent ID and an ID of the online content, and: if so, provide access to online content to the user equipment; if not, provide at least one option to pay for the online content.

In one embodiment, the method further comprises, in response to successful authentication in step f): allocating an IP address to the user equipment for accessing the payment system; provide the payment system with the IP address of the user equipment; storing, by the payment system, a map between the IP address and the persistent ID of the user equipment; and wherein step g) further includes determining the persistent ID based on the IP address of the user equipment and the stored map.

In one embodiment, the persistent ID is a Generic Public Subscription Identifier, preferably a Mobile Station International Subscriber Directory Number.

In one embodiment, the method further comprises: storing, by the payment system, in response to successful completed payment of the online content, in the user equipment, a token or an identifier of completed purchase; wherein the user equipment, in step a), provides the content provider with the token or the identifier; wherein the content provider requests, from the payment system, authorization of the requested online content using the token or the identifier; and wherein the content provider allows access to the online content to the user equipment in response to successful authorization.

In one embodiment, no further registration and/or credentials are required by the user equipment for accessing the content.

In one embodiment, step g) further includes determine an account of the user equipment based on the persistent ID; and step h) further includes monitoring the total payable debit of the account of the user equipment, and to request, after a predetermined time interval and/or on exceeding a predetermined value of total payable, settlement of at least part of the total payable.

The objective is further achieved by system comprising: a user equipment connected to a public land mobile network including a policy function and a core network managing functions, a content provider including server, such as a web server; and a payment system including an authentication server, such as an AAA server and/or a secondary authentication server; wherein the system is configured to perform the herein described method.

The objective is further achieved by a computer program comprising instructions to cause a system, such as the system above, to execute the steps of the herein described method.

The objective is further achieved by a computer-readable medium having stored thereon the above computer program.

### Detailed description of the figures

In the following, embodiments of the invention are described with respect to the figures, wherein:
Fig. 1 shows a system of the present application;
Figs. 2 and 3 depicts a message sequence chart showing messages exchanged;
Figs. 4 to 6 shows user display of a User Equipment of the present application;
Figs. 7 and 8 depicts a message sequence chart showing messages exchanged;
Fig. 9 shows steps of an embodiment of the herein described method;
Fig. 10 depicts steps of a method of the present application.

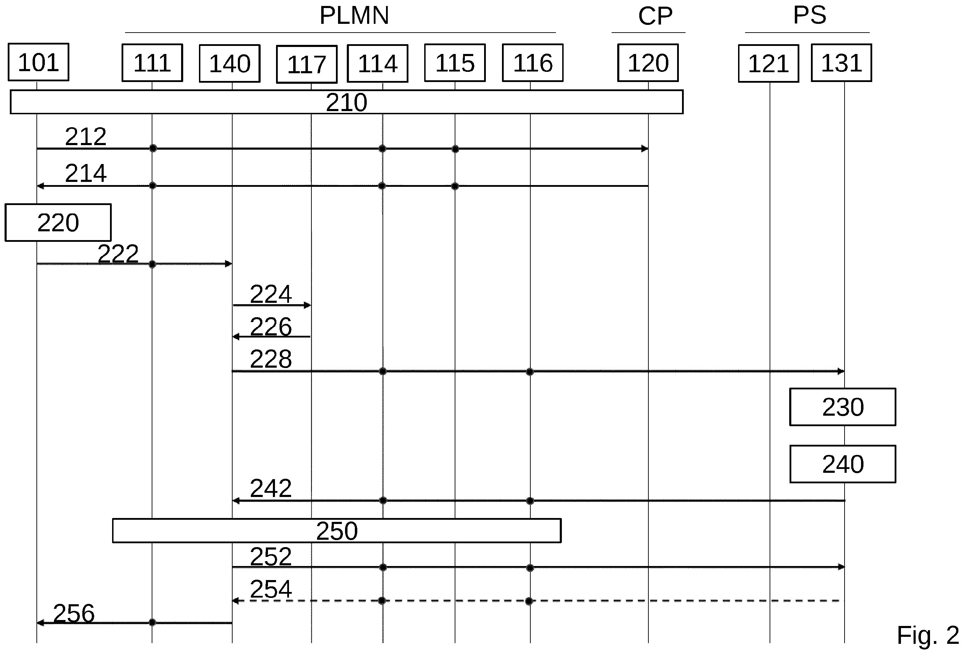

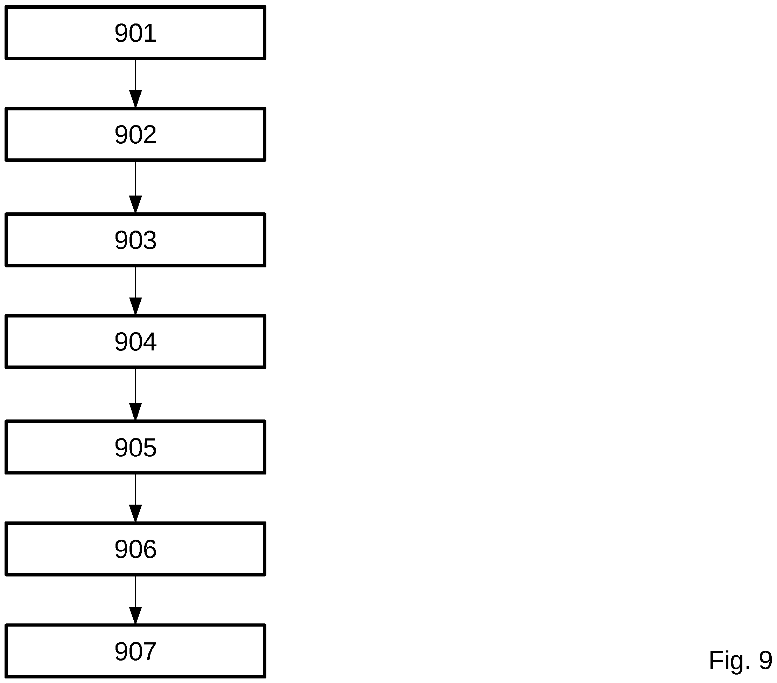

Starting with Fig. 9, in a first step 901, the code embedded in the content provider web page and downloaded to the UE device triggers a connection setup by the UE device to a server of the payment system to download information and/or executable code (also 212, 214, and 220 of Fig. 2). The connection setup triggers a session establishment request to set up a Packet Data Unit (PDU) session between the UE device through the core network to an edge router of the core network, a so-called User Plane Function (UPF) finally connecting the UE device to a data network that provides a connection to the payment system. The PDU session establishment request is transmitted by the UE device to the core network, where a Session Management Function (SMF) is triggered to setup the connection (also ref 222 and 224 of Fig. 2).

The PDU session establishment request may comprise the web session identity and a security token. The SMF receives from a subscriber data base of the PLMN a public subscriber identity (GPSI). The SMF receives from the PCF information that requests the SMF to perform a secondary authentication and/or authorization with a AAA server of the payment system before the requested connection can be established (also ref 226 of Fig. 2). If a secondary authentication is mandated by the respective policies and the PDU session establishment request received from the UE device did not comprise authentication credentials, e.g. a web session identity and a security token or similar information, the SMF may act as an EAP authenticator and transmit to the UE device an EAP request, requesting these credentials. The UE device may then reply with an EAP response providing the credentials, e.g. the web session identification and the security token.

In a second step 902, the SMF transmits a request for authentication and/or authorization to a AAA server of the payment system and includes the received GPSI (also ref 228 of Fig. 2). The SMF may in addition include the web session identity and/or the security token if these were received from the UE device.

In a third step 903, the payment system receives the request for authentication and/or authorization and determines, based on the received GPSI, an account in a data base of the payment system (also ref 230 and 240 of Fig. 2). If an account cannot be determined from the data base, a new account is created. If a web session identity is included in the request, the web session identity is stored by the payment system to associate the web session between the UE device and the web server of the content provider with the determined or newly created account. If a security token is embedded in the request, it may be used by the payment system to authenticate the content provider.

It should be understood that the usage of the credentials provided by the UE device does not identify nor authenticate the UE device but the content provider and/or the web session between the UE device and the content provider. This is an enhancement of the current secondary authentication.

In a fourth step 904, the payment system transmits a reply to the request for authentication and/or authorization to the SMF which comprises an indication that the subscriber has been authenticated and/or authorized to access the payment system (also ref 242 of Fig. 2).

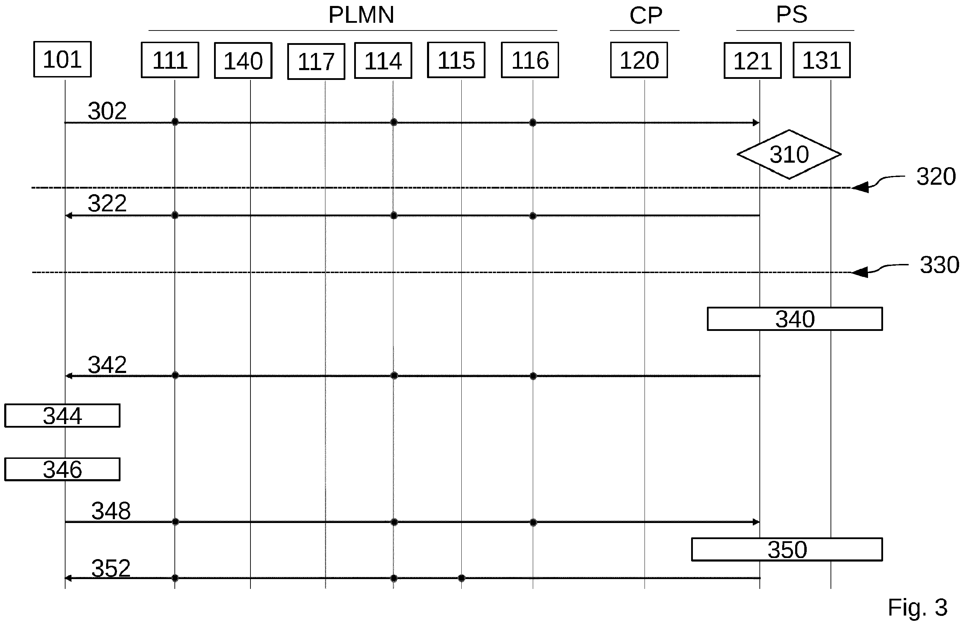

In a fifth step 905 the SMF establishes the PDU session as requested (also ref 250 of Fig. 2). As part of the normal PDU session establishment, the PLMN allocates an IP-address or IP-prefix to the UE device for communication over the PDU session to the data network. The AAA server in the payment system may be informed about the new IP-address or IP-prefix by the SMF and the AAA server stores the address in relation to the GPSI or the determined or newly created account (also ref. 252 and 254 of Fig. 2). Now, the UE device can connect to the payment system via the newly established connection and request the information and/or executable code for download and execution (also ref. 302 of Fig. 3). The payment system may identify any request from or communication with the UE device by its source IP-address or IP-prefix being the one received by the AAA server from the SMF and associates the communication with the determined or newly created account previously determined on the base of the received GPSI. The request for information and/or executable code may comprise an identification of pay content.

In a sixth step 906, the payment system determines information and/or code that is specific for the associated account and transmits, as a reply to the request for information and/or executable code, the information and/or code that is specific for the associated account. Specific in this step means that the functions, the number and the appearance of text elements and control elements transmitted to the UE device may be adapted to show information that is part of the account data or to present control elements only if they apply to the current status of the account. The payment system may for example determine from the account information, whether the pay content should be accessible to the user because the pay content is already purchased or whether options for purchasing the content should be provided to the user (also ref 310, 320, 322, 330, 340, and 342 of Fig. 3).

In a seventh step 907, the UE device presents to the user information and/or one or more control elements that are specific to the account associated with the subscriber in the above-mentioned way. Access to pay content may for example be provided if it is determined from the account information, that the pay content is already purchased. In that case, code for rendering control elements for accessing the content, e.g. a play, read or download button, may be transmitted to the UE device. Otherwise, code for rendering control elements for purchasing the content with account dependent purchase options may be transmitted to the UE device (also ref 344 of Fig. 3). The control elements of purchasing may comprise
- an account balance of the account associated with the subscriber,
- a control element for purchasing digital content via payment via the payment system of an amount without immediate settlement of the account balance,
- a control element for purchasing digital content via payment via the payment system of an amount with immediate settlement of at least a part of the account balance,
- a control element for purchasing digital content via the payment system by acknowledging the allowance for the payment system to submit personal information of the subscriber stored in a data base of the payment system to a third party,
- a control element for entering personal information of the subscriber and transmitting the personal data to the payment system for storage and for purchasing digital content via the payment system by acknowledging the allowance for the payment system to submit the personal information of the subscriber to a third part,
- a control element for purchasing digital content via one or more other systems then the payment system.

Depending on the presented control elements, the user of the UE device may select and activate one of the one or more control elements to purchase digital content based on the way of purchase associated with the control element (also ref 346 of Fig. 3). The activated control element may trigger, potentially after an acknowledgement of the user for the selected way of purchase, transmission of control information via the connection to the payment system, the control information informing the payment system about the activated control (also ref 348 of Fig. 3).

The payment system will then execute the payment according to the selected way of purchase, i.e. add the amount to the account's total due, settle (a part of) the account or settle the purchase or a part of the account for the right to forward personal information to a third party (also ref 350 of Fig. 3). The payment system will then transmit to the UE device code that provides to the UE device access to the pay content. This may be done by redirecting the browser of the UE device to the content provider web page which basically results in a reload of the web page and a restart of the described procedures with the payment system; this time determining that the content has been purchased and the content should be accessible to the user right away (also ref 352 of Fig. 3).

The web session identification may be any kind of information associated by the UE device with the content provider, the content provider web service or the connection between the UE device and the content provider web server, e.g. an address used by the UE device or the web server. The web session identification may be received from the content provider web server as a cookie or as an information embedded in a script relating to the payment system or determined by the UE device in any other way. In a preferred embodiment, the web session identifier may be an identifier of pay content the subscriber of the UE device may have access to or may purchase access to. The web session identification may then identify specific content offered to the user via the content provider web server. The content is the subject of the purchasing activity enabled by the present invention.

The security token may be any kind of token generated by the content provider, e.g. in relation to the web session identification, based on a cryptographic algorithm and transmitted to the UE device to authenticate the web session towards the payment system. The security token may alternatively be information generated by the payment system, provided to the content provider and transmitted to the UE device.

The inventive steps of above method are mainly executed by the payment system, which is described in the following for better understanding of above method:
A payment system that offers executable code and/or information for download by a UE device via a PLMN that comprises a 5G core network, the payment system
- receiving from the 5G core network a request generated by the 5G core network to authenticate a subscriber of the PLMN or authorize a connection between the UE device of the subscriber and the payment system, the request comprising
   ∘ an identification of the subscriber of the UE device,
   ∘ a web session identification (optional), and
   ∘ a security token (optional),
- determining an account stored in a data base of the payment system based on the identification of the subscriber of the UE device,
   ∘ if no account can be determined, creating a new account and associating it with the identification of the subscriber of the UE device,
- transmitting to the 5G core network an acknowledgement of the authentication of the subscriber and/or authorization of the connection,
- receiving from the 5G core network an address information associated with the connection between the UE device of the subscriber and the payment system (optional),
- receiving from the UE device a request for the download of executable code and/or information via the connection, the request comprising an identification of pay content,
- the connection identified by the payment system on the base of the address information (optional),
- determining, based on the determined or newly created account, whether
   ∘ the pay content identified in the request should be accessible to the subscriber, in which case the payment system determines information and/or executable code that causes the UE device to render control elements for accessing the pay content, or
   ∘ the pay content needs to be purchased before it can be accessed by the subscriber, in which case the payment system determines account specific information and/or executable code,
      ▪ the information comprising account specific text or numbers to be presented to the user of the UE device, and/or
      ▪ the executable code comprising description of one or more control elements for purchasing digital content with each control element representing an account dependent purchase method,
- and transmitting to the UE device via the connection the determined information and/or executable code.

And further, the payment system performing one or more of
- receiving from the UE device via the connection information about a selected purchase method or an activated control element representing a selected purchase method, executing the purchase according to the selected method based on the account and causing the UE device to render access to the pay content, and
- identifying the content provider to which the purchase relates at least partly from the web session identification.
- receiving from the SMF a security token in the request to authenticate a subscriber of the PLMN and/or to authorize a connection between a UE device and the payment system, and authenticating the content provider to which the request relates on the base of the token, at least a part of the web session identification and a cryptographic algorithm.
- identifying the UE device from the web session identification and associating the web session identification with the account determined based on the identification of the subscriber of the UE device received from the 5G core network.
- identifying the UE device from the web session identification, determining an account based web session identification and associating this account with the identification of the subscriber of the UE device received from the 5G core network (which may lead to a merging of two accounts, if for each, the web session ID and the 5G subscriber ID an account was determined).

The web session identification and/or the security token may be sent by the UE device to the SMF in a request for PDU session establishment, e.g. as a message part foreseen for username and password or as an authentication information container passed to the SMF in the PDU session establishment message.

In all cases, the 5G core network subscriber identification (GPSI) is not generated or sent by the UE device, it is stored in a subscriber data base, provided to the SMF and sent from the SMF to the AAA server so that the GPSI provides to the payment system a trusted identification of the subscriber of the PLMN.

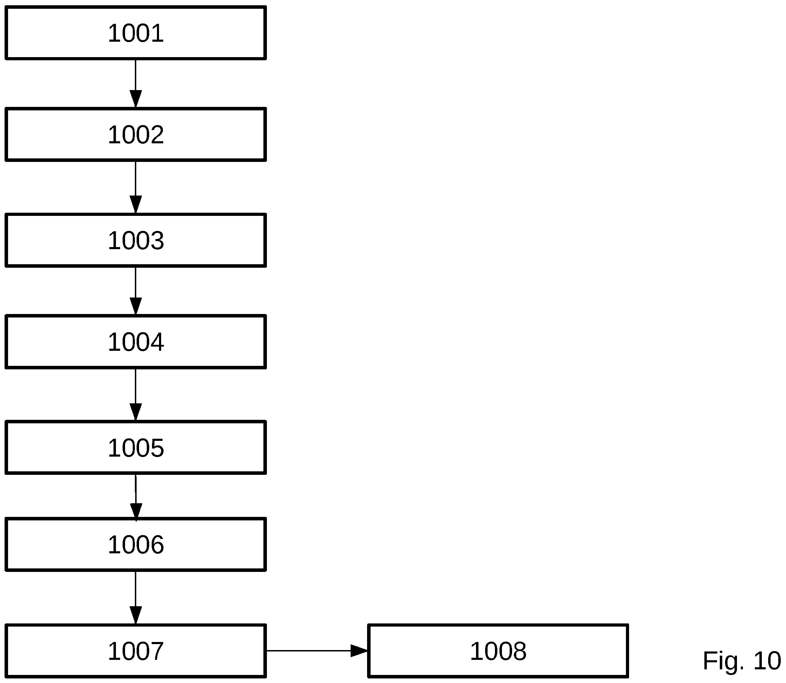

Fig. 10 depicts steps of a method according to the present invention, for providing paid access to online content, the method comprising: sending 1001, by a user equipment 101, a signal requesting the online content from a content provider 120, preferably a web server 121 of the content provider 120; receiving 1002, by the user equipment 101, a response signal with an address of a payment system 130; sending 1003, by the user equipment, first session request signal, preferably a PDU session setup request signal, requesting a communication session, preferably a PDU session, with the payment system 130; determining 1004, by a policy function 117, preferably by a Policy Control Function of a public land mobile network 110 of the user equipment 101, an address of an authentication server 131 based on the address of the payment system 130, the authentication server preferably being a secondary authentication server and/or an AAA server, preferably remote from the public land mobile network 110; determining 1005, by a core network managing function 140, a persistent ID of the user equipment 101 and providing the persistent ID to the authentication server 131 in a second session request signal 228, preferably in a SMF/AAA Session Request signal; determining 1006, by the authentication server 131, the authenticity of the user equipment 101 using the persistent ID; determining 1007, by the payment system 130, based on the persistent ID, a payment status of the user equipment 101 for the online content; and enabling 1008 at least one user option, preferably via a first session established in response to the first session request signal, at the user equipment 101 for the online content, based on the payment status, preferably at least one option to gain access to the online content, to pay for the online content, and/or to donate money to the content provider 120.

### Further Embodiments

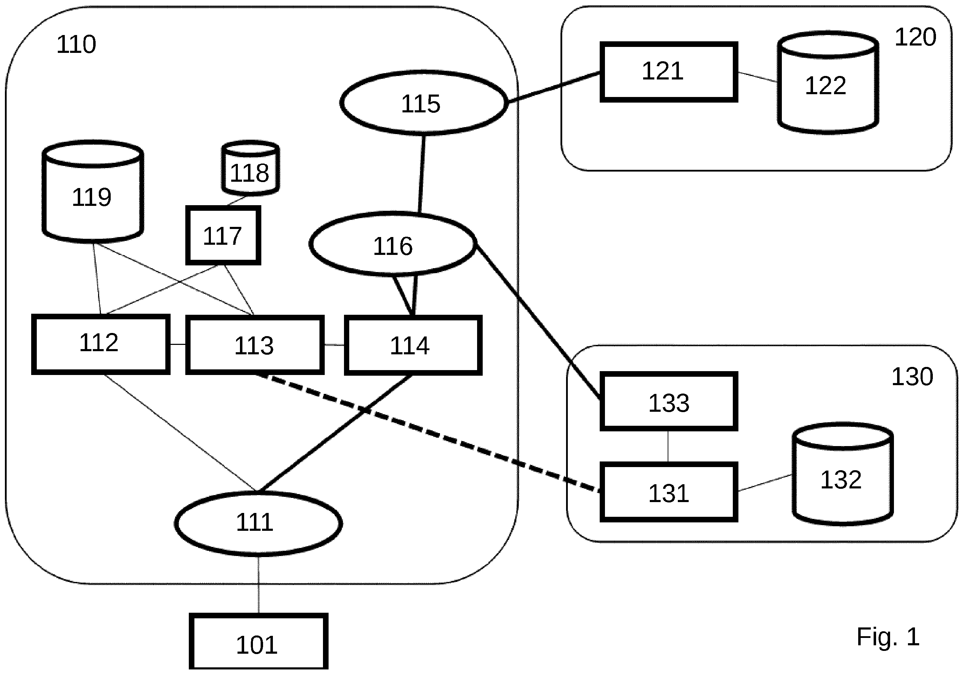

Fig. 1 shows an architecture of a UE device (UE) 101 and three networks, a PLMN 110, a content provider network 120 and a payment system network 130.

The UE device 101 is connected to the PLMN 110 via an access network (AN) 111. The access network may be a 5G New Radio network, an LTE network, a WLAN access network or any other access network that provides access to the PLMN's core network. The core network comprises
- an Access and Mobility Function (AMF) 112 controlling and managing the UE device,
- a Session Management Function (SMF) 113 controlling the setup, maintenance and release of PDU sessions,
- a User Plane Function (UPF) 114 that is a router for data routing between the access network and one or more data networks in the core network, the UPF being controlled by the SMF 113,
- a data base (DB) 119 providing subscriber specific information, data network specific policies and other information,
- a Policy Control Function (PCF) 117 with a connected Policy Data Base (PDB) providing rules and parameters, i.e. policies, to AMF and SMF, and
- Data Networks (Data Network 1, 115 and Data Network 2, 116) which are basically egress points of the core network to different outside networks, in this example to a network comprising the content provider and to a network comprising the payment system, respectively.

The above-mentioned entities may be present in a core network multiple time, e.g. there may be multiple AMFs while for each UE device a single AMF is usually selected and there may be multiple SMFs and UPFs even for a single UE device, e.g. for different PDU sessions. Fig. 1 only shows one appearance of each network element for ease of readability.

The first data network (Data Network 1) 115 may connect a UE device 101 to a content provider network 120 comprising a content provider web server 121 and a media repository (Media) 122. The Content provider offers a freely accessible web page providing information about the content in offer. In this example, the content may be streaming music offered by the content provider. A UE device 101 connecting to the content provider web server 121 via the PLMN 110 will setup a PDU session with the core network of the PLMN first to Data Network 1 115 in order to be able to connect to the content provider web server. During setup of the PDU session, the UE device will receive a first IP-address that may be specific for the data network and that will be used by the UE device 101 when connecting to the content provider web server.

When a user of the UE device 101 selects from the content offered by the Web Server content to be streamed, a purchase mechanism according to the current invention will be executed that will result in a fee for the content being accounted for and the web server streaming the purchased content from its media data base. Obviously, similar setups are supported by this invention, i.e. the media data base does not have to be part of the same network as the content provider web server and the media may be streamed by another entity than the web server that is not shown in Fig. 1. The content can be any kind of digital media like music, voice audio (podcast), video, movie, text, image or a combination thereof.

The second data network (Data Network 2) may connect a UE device to a payment System comprising a server, e.g. a web server or an information and script server, a AAA server and an account data base (DB). The payment system may or may not be freely accessible, but when accessed through the PLMN 110, a connection needs to be authorized and the subscriber connecting to the content provider may need to be authenticated. Again, for connecting to the payment system via the PLMN 110, the UE device 101 will setup a PDU session to Data Network 2 116 and received a second IP-address that may be different from the first IP-address.

For a secondary authentication between the PLMN 110, specifically an SMF 113 of the PLMN, and the AAA server 131 of the payment system, the SMF and the AAA server establish a connection and keep that connection as long as the UE device has the related connection to the payment system server. The connection between SMF 113 and AAA server 131 is shown as dashed line because the logically direct connection may in fact be established through the UPF and Data Network 2, which is omitted in Fig. 1 for better readability.

Fig. 2 depicts a message sequence chart showing messages exchanged between the entities shown in Fig. 1, namely the UE device (UE) 101, the PLMN 110 comprising an access network (AN) 111 , core network management functions (AMF 112 and SMF 113 in Fig. 1, collectively CNMF 140 in Fig. 2), a policy control function (PCF) 117 including policy data base (PDB) 118, a user plane function (UPF) 114 and two data networks (DN 1 115 and DN 2 116), a content provider (CP) network 120 not detailed in Fig. 2 and a payment system (PS) 130 with a Payment Server 133 and an AAA server 131 with account data base 132.

In a first embodiment of the present invention, the UE device may be registered 210 in the PLMN 110, a primary authentication based on credentials stored on a USIM of the UE device has been performed and a web session has been established between the UE device 101 and the content provider 120, i.e. a PDU session between the UE device 101 and DN 1 115 has been established.

The web page or web content of the content provider is requested by the UE device, typically in a HTTP-request 212 comprising the resource locator of the content that is requested. As part of the HTTP-response 214 comprising the web page, a script is downloaded that comprises a link to or a source information linking to a payment system. The script, when executed on a mobile device, loads more information, text and/or executable code from a payment system server referenced by the link or source information. Within the script or as another part of the web page download, the UE device receives a content identity of media content the user of the UE device seeks to stream (Content ID) and a security token.

The Content ID could, for example, be constructed from known address information, e.g. an IP-addresses of the content provider web server 121 and the UE device 101, a URL to the content resource in the content provider network. The Content ID may otherwise identify more than one piece of content, e.g. it may identify the content provider as a whole. It could otherwise be a random number generated by the content provider web server identifying the content. The Content ID in this example may be a URL providing access to the content on a content provider server.

In this example, the security token may be a cryptographic signature of the Content ID, calculated with a private key of the content provider. The security token may be used by the UE device to authenticate the content provider based on an available public key, e.g. as part of a certificate downloaded in addition. In this embodiment. the security token will be used for authenticating the content provider and/or the content by the payment system in a later step.

When rendering the downloaded web page content, the script is executed, and a link or a source information in the script triggers a connection setup to the payment system. It may be that the browser application triggers the modem of the UE device 101 to setup a new connection to the linked address via an API of the operating system (OS) of the UE device 101, providing the Content ID and the security token with the request. It may be that the code in the script comprises information that triggers the delivery of the Content ID and the security token. Alternatively, the browser application determines that the two parameters need to be delivered to the connection setup. The modem in the UE device will then determine 220 that a new connection needs to be setup which requires a new PDU session targeted to the payment system address provided by the link information in the script. The UE device, that is the cellular modem in the UE device, will transmit a PDU Session setup request message 222 to the Core Network Managing Functions (CNMF) 140 via the AN 111 comprising the Content ID and the security token.

It is one of the inventive aspects of this invention that a UE device uses a Content ID and a security token as authentication credentials provided to the CNMF 140, as these parameters differ from the parameters currently foreseen to be used. The currently known usage of the 5G secondary authentication requires the UE device to provide credentials that identify and authenticate the subscriber or the UE device towards a service provider. However, the Content ID does not identify the UE device and the security token does not authenticate the UE device towards the payment system. Thus, one of the inventive steps in this invention is to base the authentication of the UE device 101 in the payment system 130 on the GPSI received from the 5G core network and using the transport of credentials in the secondary authentication for identifying the content provider, the web session to the content provider, or pay content of the content provider and authenticating the content provider, the web session or the content in the payment system.

When the message is received by the SMF 113, which is a part of the CNMF 140 of Fig. 2, it determines the policies related to the target of the PDU session to be setup. The target is given by the payment system address in the PDU session setup request from the UE device 101. The PCF or another entity of the core network may have provided the SMF with the policies related to the PDU session to be set up in advance, i.e. the SMF may be configured with a list of target addresses and related policies. In an alternative, the AMF 112, which is another part of the CNMF 140 in Fig. 2, may be configured with such a list and inform the SMF about the policy related to the PDU session currently to be set up. In this embodiment, the SMF requests 224 the PCF for policies related to the PDU session to be setup when the PDU Session Setup Request is received.

In an alternative embodiment, the UE device or its cellular modem will request a PDU session at the CNMF without providing the Content ID or the security token. In this alternative, after the SMF determined from a policy that a secondary authentication is required before setup of the connection to the payment system can be pursued, the SMF acts as an EAP authenticator as described in the EAP specification and transmits an EAP request to the UE device requesting missing credentials for authentication of the UE device at the payment system. The UE device will then provide these credentials in an EAP response. The method of this alternative embodiment is otherwise identical with the described method. The credentials, as stated above, may be for identifying the content provider, and not for identifying the UE device.

In yet another alternative embodiment, the UE device or its cellular modem will request a PDU session at the CNMF without providing the Content ID or the security token and the SMF determines from a policy that a secondary authorization but no authentication is required before setup of the connection to the payment system can be pursued. This leads to the SMF not providing any credentials for authentication to the AAA server but only the GPSI.

The PCF 117 will now look up policies in its policy storage (data base 118) and determine related policies. It is assumed that the operator of the payment system 130 and the operator of the PLMN 110 have a service level agreement and the PLMN has stored policies related to PDU session targeting the payment system. One rule of such policy may be that for PDU sessions targeting the payment system, a secondary authentication / authorization has to be performed successfully before the PDU session can be set up. The PCF will provide the policy 226 to the SMF (CNMF) including the address of the AAA server of the payment system against which the authentication / authorization has to be performed.

The SMF now requests authentication and/or authorization from the AAA server indicated in the policy. The SMF sets up a communication session with the AAA server which is assumed to be done by transmitting a SMF/AAA Session Request message 228 to the AAA server. This message may include a request for authentication or authorization which includes a Global Public Subscriber Identity (GPSI), the Content ID and a security token. The GPSI may be an MSISDN or a similar identity of the subscriber of the UE device. Alternatively, the GPSI may be a target specific subscriber identifier, i.e. the PLMN generates a unique ID for the subscriber for each target network, to which the PLMN provides an ID. This will enable target networks to identify and recognize subscribers without receiving a globally unique number that allows tracking over multiple services. The unique ID may be a cryptographic hash of a combination of the GPSI and a target network ID, preferably with a secret number sufficient large to prevent brute-force search.

The AAA server 131 in the payment system 130 may first authenticate 230 the content provider to ensure that the connection that is requested by the SMF to be authorized is setup in relation to a web session with the correct content provider. It may do so by verifying the signature of the Content ID provided via the security token using a known, i.e. stored, certificate or public key of the content provider.

After the content provider and thus the web session between the UE device and the web server is authenticated, the AAA server of the payment system will query the GPSI in its data base to determine an account 240 related to the GPSI. If such an account is found, it is associated with the connection to the SMF. If such an account is not found, a new account is created, stored in the data base and associated with the GPSI and the connection to the SMF. The payment system AAA server 131 then sends a SMF/AAA Session Accept message 242 to the SMF to confirm authentication of the subscriber and/or authorization of the connection. The AAA server may include the GPSI in the message to ensure the SMF associates the message to the correct PDU session setup procedure. Obviously, in other embodiments, the session request and accept and the authentication / authorization may be performed in separate messages.

The core network will then finalize the PDU session setup and allocate an appropriate IP-address to the PDU session to be used by the UE device 250. Further it will notify the AAA server of the payment system about the newly allocated IP-address in an SMF/AAA Session Modification message 252 and the AAA server will store this address to associate all communication to and from that address with the determined or newly created account. A message may optionally be sent by the AAA server to the SMF acknowledging the modification, the optionality being indicated with a dashed line 254 in Fig. 2.

The SMF will now inform the UE device about the finalized and accepted PDU session setup and the related IP-address 256. This information may alternatively be sent to the UE device as part of the PDU session establishment before or during the AAA server is informed about the new IP-address. In general, the steps of the described method do not necessarily need to be performed in the described order but any order that leads to the same basic functionality will be an embodiment of the inventive method.

The message sequence chart of Fig. 2 is continued in Fig. 3. The UE device is now configured with a PDU session for connecting to the payment system and so the UE device will request 302 from the payment system the information or executable code that was linked by the script from the content provider web server. The request, sent by the UE device in one or more messages, each potentially performed in mutual message exchanges of which only one message is shown in Fig. 3, uses the newly established PDU session via the PLMN with the newly allocated IP-address which is associated with the determined or newly created account in the payment system. The request, sent by the UE device, may contain the Content ID, especially in the above-mentioned other alternative embodiment in which the Content ID was not delivered as part of the authentication information to the AAA server by the SMF. The request may also comprise another identification of content, different from the various alternatives for the Content ID described above.

The payment system will now determine 310 from the account information whether the subscriber has already access to the pay content. This is done based on a content identification, e.g. the Content ID, and information stored as part of the account information in a data base of the payment system. If the UE has access 320, the payment system will determine information for transmission 322 to the UE device that renders control elements for accessing the content, otherwise 330 it will determine 340 account specific information and code to be transmitted 342 to the UE device that renders 344 purchasing options as a response to the request.

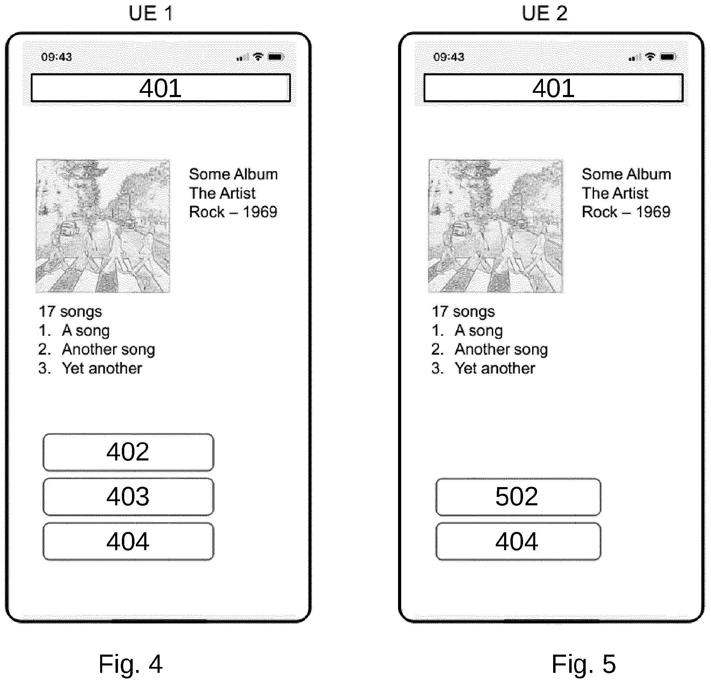

Now switching the description to Figs. 4 and 5 which show a sketch of the user interface of two UE devices, UE 1 and UE 2. Figs. 4 and 5 show example of User Equipment 101 display in the case of no immediate access 330. The devices have an active browser session to a content provider showing a web page that is depicted in the figures. They show a music album shown on the screen, the cover at the left, some meta data at the right and a list of songs below. At the bottom of the web page, two buttons are present for two different purchase options. The bottom of the web page may be provided from the payment system, and not from the content provider, i.e. within a HTML iframe of the web page of the content provider.

The buttons are different for the two devices. UE 1 is offered a purchase of the album for 99ct with advertisements being included, e.g. between songs of the album, without immediate payment, a total due of 1.98 USD is shown for information. Alternative, the album is offered for 1.99 USD without ads and without immediate payment. Both these options may involve LaterPay functionality of deferred payment as explained above. In another alternative a purchase is offered for allowing the payment system to provide personal information to a sponsor, the sponsor paying for the purchase in reply. This example might not include LaterPay functionality. UE 2 is offered a purchase for the same price but requires an immediate settlement of the total due, since it is over a pre-set threshold (in the example, the total due is 5.73 USD). The alternative purchase method for UE 2 is similar to the one offered to the user of UE 1 but with a different, UE specific sponsor. The sponsor may be determined by the payment system based on account information, e.g. based on past purchases, settlement methods, age, gender or other personal information of the subscriber of the respective UE devices.

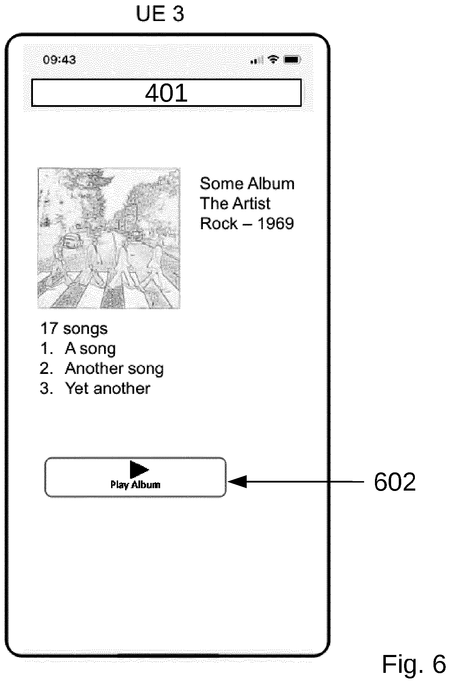

Figs. 4 and 5 show the result of the current invention that allows different UE devices connecting to the same web service to be offered different purchase options based on a reliable identification via the PLMN. The different purchase options are assumed to be realized by different control buttons. The control buttons shown on each UE device are the result of executing code and rendering information received from the payment system. Fig. 6 shows a third UE device, UE 3, which accesses the same web page but receives direct access to the music album via respective buttons at the bottom because it has already purchased the content before. This display may also be shown on UE 1 and UE 2 after completed purchase.

Switching now back to Fig. 3, the account specific information and code determined by the payment system based on the account information comprises the determination of the number of control buttons with their respective caption and related purchase methods. After the determination, the code is provided to the UE device via the connection for rendering as part of the web page shown to the user. The rendering of the code received by the UE device will result in the respective results of the three example UE devices shown in Figs. 4, 5 and 6. When the user selects 346 a method for purchasing the album, user interaction with the respective control button triggers a message 348 from the UE device to the payments system which will then execute the payment 350 according to the selected method. The execution is not shown in Fig. 3 in detail and will not be described herein, it may comprise accounting for the purchase price on the account balance, settling the balance and/or requesting personal information from the subscriber and providing the information to a third party. In any case information about the purchase of the content associated with a content identification is stored in the account in the data base 132 of the payment system 130 in order to provide direct access to the content later. In case the content provider has a LaterPay account associated with it, the amount may also be credited on the content provider's LaterPay account.

After the payment is executed, the UE device is given access to the content. This may be done in several ways. One way of doing so is to refer the browser of the UE device to the content provider's web page which reloads the web page. In this case, the repeated check for the Content ID against the account information will result in immediate access 320 to the pay content as shown for UE 3 in Fig. 6.

In an alternative embodiment, that is not shown in the figures, the payment system provides after execution of the payment to the UE device a replacement of the code and information previously transmitted to the UE device, e.g. to change the offered control buttons into text elements acknowledging the purchase of the content and providing the new balance of the account and/or providing control elements for playing the content just purchased.

In alternative embodiments, a web session identification is transmitted in the web page information, e.g. in the downloaded script, from the content provider to the UE device and the web session identification is used by the UE device replacing the Content ID in the PDU session establishment request and by the SMF in the request to the AAA server of the payment system for authentication of the connection. Identifying the web session instead of specific content may be used by the payment system to authenticate the content provider and ensure, the accounting and purchasing is for real content and the subscriber has not accessed a fake web page. In some embodiments it may be foreseen that the payment system and the content provider system have a direct connection and the web session identification received from the UE device may be used by the payment system as a reference in communication with the content provider.

In a different embodiment of the current invention, a subscriber accesses via his UE device and via a PLMN a social media platform. An artist may provide information and/or content for users to look at, stream or download. The social media platform may enable contribution buttons on the web appearance for artists which offer content for free. Users are offered these to donate small amounts to the artists of they like their content.

The embodiment is using a similar setup and method as explained with relation to Figs. 1 to 3 and it is now explained with reference to the same figures, mainly describing the difference to previous embodiments.

The UE is registered in a PLMN that comprises a 5G core network with the elements shown in Fig. 1. The UE device accesses via a first data network a content provider network which is now a social media platform. The UE device later accesses via a second data network the payment system network. The UE device downloads the web page content of the content provider including a script referring to the payment system and triggering a connection to the same. A PDU session establishment request is sent by the UE device to the 5G core network, now including an identification of the social media platform or an identification of the artist or both as the Content ID. The security token may authenticate the social media platform.

A policy in the core network will trigger the SMF to request authentication and/or authorization from the AAA server of the payment system based on a GPSI and optionally taken into account the Content ID and the security token. The payment system will determine an account, or generate a new account, and acknowledge the connection setup. The payments system will receive the IP address of the UE device to associate it with the account. The UE device will connect to the payment system via the new established connection and request the additional information and/or executable code.

Now, the payment system will determine, based on a total due of the account, whether a donation may be done without immediate payment and what the amount of the total due. The payment system will then generate code and information for transfer to the UE device for rendering controls offering donation options without immediate payment. The payment system may in addition or instead generate code to rendering controls offering donation options combined with a settlement of the current total due or a part thereof. The payment system may in addition or instead generate code for presenting information to the subscriber of how much the total donation of the subscriber to this artist is. The code and information are transmitted to the UE device and rendered so that the subscriber may activate a donation button of his choice. No choice has to be done in the payment system in this embodiment as to whether immediate access to content should be given to the subscriber, but account specific controls are identified based on the account information identified from the GPSI received from the 5G core network.

A selection and activation by the subscriber of a control button will cause the payment system to execute the donation including a potential settlement and refer the browser back to the social media platform to reload the web page and refresh the donation and account information.

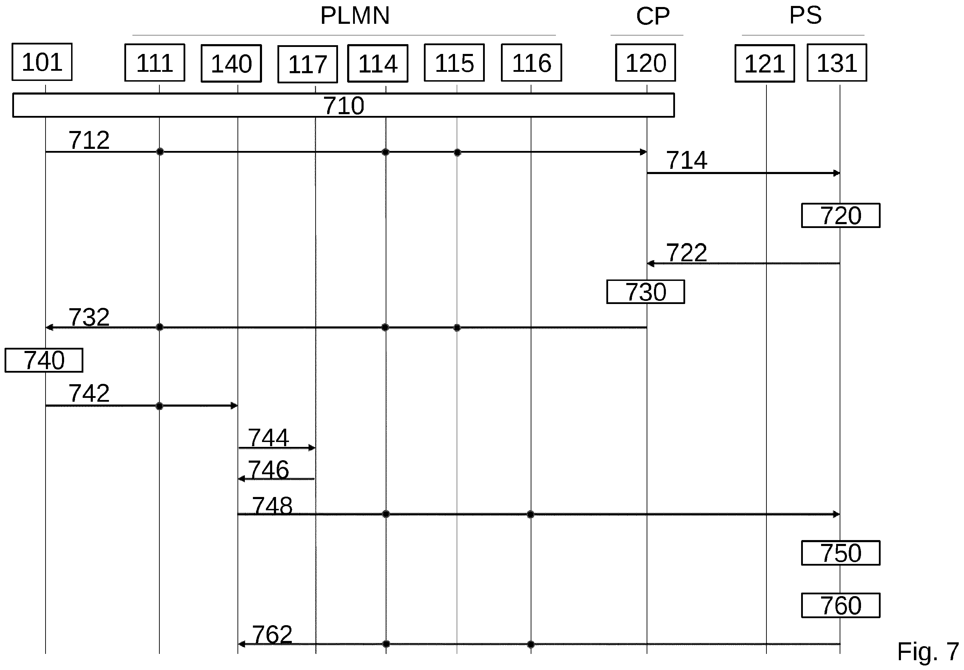

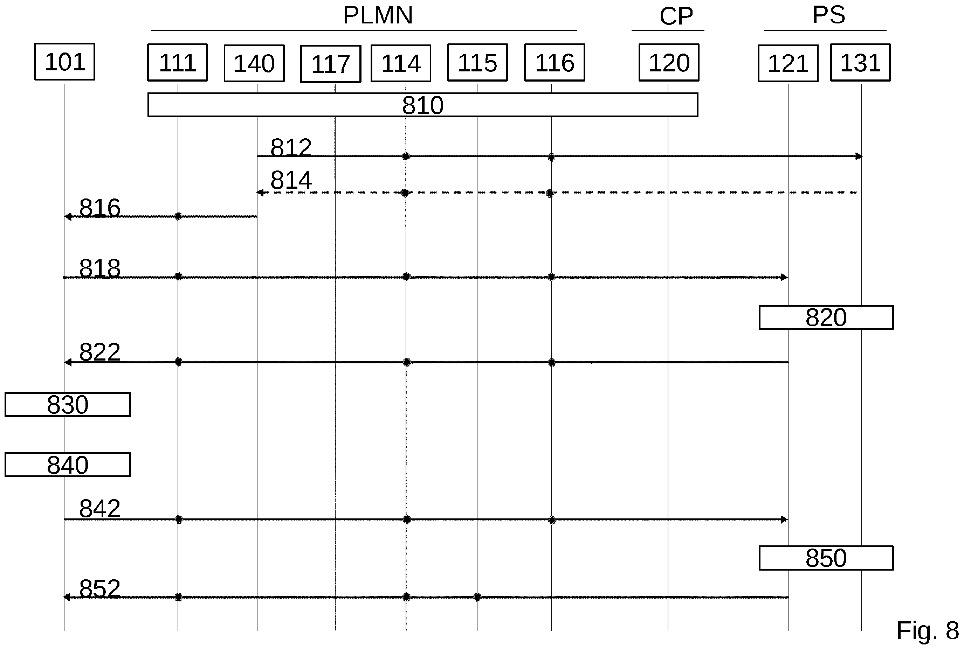

A message flow of a further embodiment is shown in Figs. 7 and 8. The embodiment is again similar to the previous embodiments and it uses the same setup already described in reference to Fig. 1. The difference of this embodiment to the previous embodiments is that an authorization of the access to content is performed between the content provider and the payment system directly and the web content transmitted to the UE device by the content provider is already adapted to comprise a direct content access option or one or more purchase options.

In this embodiment, a UE device 101 may have a connection via a PLMN to a content provider web server 120 (710 of Fig. 7). The UE device, when requesting the web content, e.g. via a HTTP-request 712, from the web server, includes in the request a token that may be contained in a file stored on the UE device, e.g. a cookie. The token may have been stored on the UE device as a cookie during a previous web session between the UE device and the payment system, the token identifying the subscriber of the UE device. The web server of the content provider thus receives a subscriber identification before it transmits a HTTP-response to the UE device comprising the web content requested by the device.

The content provider web server then transmits to the payment system AAA server 131 a request for authorizing access 714 to the content offered on the web page of the content provider for the subscriber identified by the token. The AAA server of the payment system determines an account based on the token and further determines whether access to the content identified in the request has been purchase by the subscriber previously 720. If so, the payment system authorizes the access to the content by replying to the content provider with the information that the content should be accessible by the subscriber. In that case, the web server of the content provider can adapt the web content transmitted to the UE device so that it comprises means for accessing the content, e.g. a download, play or read button. This case is not shown in Fig. 7.

If the payments system does not have stored an account matching the subscriber identification given by the token or it determines from an account of an identified subscriber that the content has not yet been purchased, a negative reply is provided in the authentication response 722 to the content provider. This case is shown in Fig. 7. The web server of the content provider will then adapt the web content transmitted 732 to the UE device so that it comprises means for contacting the payment system and purchasing the content, e.g. purchase buttons with one or more purchase options as described in the previous embodiments. The same may apply to the web server of the content provider if no token is provided by the UE device in the HTTP-request, i.e. because no cookie has been stored previously or a cookie has been deleted. The content provider will then not request authorization from the payment system and directly adapt the web content with purchase means.

When the user activates the purchasing buttons, they trigger a PDU session setup including a secondary authentication as in the previous embodiments. The UE device will send a PDU session establishment request 742 to the core network and include the token from the cookie identifying the UE device. The token may have been stored on the UE device in a previous web session over another network than the 5G core network by the payments system. In that case, the token is associated by the payment system with an account which is not yet associated with the subscriber identification provided to the payment system by the 5G core network in the secondary authentication (GPSI). The transmission of the token in the request from the UE device to the core network and the subsequent transmission 748 from the core network to the AAA server 131 of the payment system together with a GPSI thus allows an association of a previous account, yet unrelated to the 5G subscriber identity, with the GPSI. This is an advantage of the current invention that may also be used in the previous embodiments.

The payments system will determine 760 the account, either associated with the provided GPSI, if any, or associated with the provided token or cookie-based identity, and it will merge accounts, if multiple accounts are found. If no account is found, a new account is created. The payments system will acknowledge the authentication and/or authorization of the connection to the UE device and the core network will finalize 810 the PDU session setup and it may inform 812 the payment system about the newly assigned IP-address (now continued on Fig. 8).

The UE device can now request 818 the account specific code and/or information for purchase options which are then presented 830 to the user, similar to the previous embodiments yet without the direct access options provided by the browser at this stage of the procedure as this option has been eliminated by the content provider web server during the initial web page request.

All of the embodiments described herein are described to use a browser on the UE device side to access a web server at the content provider or social media platform side. It should be understood that the embodiments basically work the same or very similar of a native application on the UE device side access an application server on the content provider or social media platform side. The referral to the original web page to refresh the presented information may then be replaced by a similar application specific trigger to render the shown content anew but the inventive steps basically stay the same.

To further increase security, an encrypted secret may be generated by the content provider. The payment system may have a key to decrypt the secret as proof of completed purchase. The User Equipment may not have this key. Encrypted secret may be a random number. The encrypted secret may be encrypted using a symmetric key, known by both the Content Provider and the Payment System. The encrypted secret may also be encrypted by a public key of the Payment System, e.g. using certificates. The encrypted secret may be decrypted by the Payment System and may be provided decrypted to the User Equipment only after completion of payment procedure. The payment procedure may include a selection of pay the content later, or allowing a third party to pay the content, e.g. in return for sharing of information. The User Equipment may provide the decrypted secret to the Content Provider as a proof of payment or selected options of gaining access to the paid content. The User Equipment may be allowed access to the content only if successful decrypted secret is provided to the content provider. The encrypted secret may be valid for a limited period of time. In such case, when the time limit expires, the User Equipment may be redirected to the payment system to decrypt a new secret for the same content. The Content Provider may track secrets and corresponding access to content. The encrypted secret may be part of the Security Token, or separate from the Security Token. The decrypted secret may be provided to the User Equipment together with code for accessing the requested content.

### Reference numerals

- 101: User Equipment (UE)
- 110: Public Land Mobile Network (PLMN)
- 111: Access Network (AN)
- 112: Access and Mobility Management Function (AMF)
- 113: Session Management Function (SMF)
- 114: User Plane Function (UPF)
- 115: Data Network 1 (DN 1)
- 116: Data Network 2 (DN 2)
- 117: Policy function (e.g. Policy Control Function) (PCF)
- 118: Policy Storage Data Base (PDB)
- 119: AMF/SMF Data Base (DB)
- 120: Content Provider (CP)
- 121: Web Server
- 122: Media
- 130: Payment System (PS)
- 131: Secondary authentication/authorization server (AAA server)
- 132: Payment System Data Base (DB)
- 133: Payment Server
- 140: Core Network Managing Functions (CNMF; AMF 112 and SMF 113 collectively)
- 210: UE registered in PLMN / Web session established
- 212: HTTP-Request [URL]
- 214: HTTP-Response [web content, script, Content ID, Security Token]
- 220: Packet Data Unit (PDU) Session required
- 222: First session request signal (PDU Session Setup Request) [PS-addr, Content ID, Security Token]
- 224: Request Policy [PS-addr]
- 226: Policy [AAA-addr]
- 228: SMF/AAA Session Request (incl. Authentication / Authorization Request) [GPSI, Content ID, Security Token]
- 230: Authenticate CP
- 240: Determine Account
- 242: SMF/AAA Session Accept (incl. Authentication / Authorization Accept) [GPSI]
- 250: First communication session (PDU Session) Establishment, IP-addr allocation
- 252: SMF/AAA Session Modification [GPSI, IP-addr]
- 254: SMF/AAA Session Modification Acknowledge [GPSI]
- 256: First session setup accept signal (PDU Session Setup Accept) [IP-addr]
- 302: Request Information / Code
- 310: Immediate access?
- 320: Immediate access
- 322: Information / Code for access
- 330: No immediate access
- 340: Determine account-specific information / code
- 342: Information / Code for purchase
- 344: Render Information / Code
- 346: User Selects Payment Method
- 348: Control Activated [Control ID]
- 350: Executing Payment
- 352: Redirect to CP (re-load web page)
- 401: Content provider URL, e.g. www.contentprovider.com
- 402: Access option 1 button, Paylater with ads, e.g. "Buy for 99ct - with ads-Pay later Balance: 1.98$ of 5$"
- 403: Access option 2 button, Paylater without ads, e.g. "Buy for 1.99$ - no ads - Pay later Balance: 1.98$ of 5$"
- 404: Access option 3 button, Get access in return for sharing private information, e.g. "Get it for free ! Let TheSponsor pay for you."
- 502: Access option 4 button, Paylater without ads where credit limit is reached, e.g. "Buy for 1.99$ - no ads - Settle your balance of 5.73$"
- 602: Play Album button
- 710: UE registered in PLMN / Web session established
- 712: HTTP-Request [URL, token]
- 714: Authorization request [token, Content ID]
- 720: Determine Account & Content
- 722: Authorization response [Authorization info]
- 730: Content not authorized
- 732: HTTP-Response [web-content, script, Subscriber ID, Security Token]
- 740: Separate communication session (e.g. PDU Session) required
- 742: First session request (e.g. PDU Session Setup Request) [PS-addr, Content ID, Security Token]
- 744: Request Policy [PS-addr]
- 746: Policy [AAA-addr]
- 748: Second session (e.g. SMF/AAA Session) Request (incl. Authentication / Authorization Request) [GPSI, Content ID, Security Token]
- 750: Authenticate CP
- 760: Determine Account
- 762: Second session (e.g. SMF/AAA Session) Accept (incl. Authentication / Authorization Accept) [GPSI]
- 810: First session (e.g. PDU Session) Establishment, IP-addr allocation
- 812: Second session (e.g. SMF/AAA Session) Modification [GPSI, IP-addr]
- 814: Second session (e.g. SMF/AAA Session) Modification Acknowledge [GPSI]
- 816: First session (e.g. PDU Session) Setup Accept [IP-addr]
- 818: Request Information / Code
- 820: Determine account-specific information / code
- 822: Information / Code for purchase
- 830: Render Information / Code
- 840: User Selects Payment Method
- 842: Control Activated [Control ID]
- 850: Executing Payment
- 852: Redirect to CP (set cookie, redirect)
- 901: First session (e.g. PDU session) setup initialization
- 902: Second session (e.g. SMF/AAA Session) Request signal
- 903: Authenticate Content Provider and Determine Account
- 904: Second session (e.g. SMF/AAA) Session Accept
- 905: First session (e.g. PDU session) establishment and IP-address allocation
- 906: Immediate access
- 907: Render Information/Code and User Selection
- 1001: sending, by a user equipment 101, a signal requesting the online content from a content provider 120
- 1002: receiving, by the user equipment 101, a response signal with an address of a payment system 130
- 1003: sending, by the user equipment, first session request signal requesting a communication session with the payment system 130
- 1004: determining, by a policy function 117 an address of an authentication server 131 based on the address of the payment system 130
- 1005: determining, by a core network managing function 140, a persistent ID of the user equipment 101 and providing the persistent ID to the authentication server 131 in a second session request signal 228
- 1006: determining, by the authentication server (131), the authenticity of the user equipment 101 using the persistent ID
- 1007: determining, by the payment system 130, based on the persistent ID, a payment status of the user equipment 101 for the online content
- 1008: enabling at least one user option, at the user equipment 101 for the online content, based on the payment status.

## Claims

1. A method for providing paid access to online content, the method comprising:
a) sending, by a user equipment (101), a signal requesting the online content from a content provider (120), preferably a web server (121) of the content provider (120);
b) receiving, by the user equipment (101), a response signal with an address of a payment system (130);
c) sending, by the user equipment, first session request signal, preferably a PDU session setup request signal, requesting a communication session, preferably a PDU session, with the payment system (130);
d) determining, by a policy function (117), preferably by a Policy Control Function of a public land mobile network (110) of the user equipment (101), an address of an authentication server (131) based on the address of the payment system (130), the authentication server preferably being a secondary authentication server and/or an AAA server, preferably remote from the public land mobile network (110);
e) determining, by a core network managing function (140), a persistent ID of the user equipment (101) and providing the persistent ID to the authentication server (131) in a second session request signal (228), preferably in a SMF/AAA Session Request signal;
f) determining, by the authentication server (131), the authenticity of the user equipment (101) using the persistent ID;
g) determining, by the payment system (130), based on the persistent ID, a payment status of the user equipment (101) for the online content; and
h) enabling at least one user option, preferably via a first session established in response to the first session request signal, at the user equipment (101) for the online content, based on the payment status, preferably at least one option to gain access to the online content, to pay for the online content, and/or to donate money to the content provider (120).

2. The method of claim 1,
wherein step b) further includes receiving a security token by the user equipment (101) from the web server (121);
wherein step e) further includes providing the authentication server (131) with the security token as secondary authentication credentials; and
wherein step f) includes authenticate, by the authentication server (131), the content provider (120) and/or a/the web server (121), using the security token.

3. The method of claim 1 or claim 2,
wherein step b) includes receiving from a/the web server (121) of the content provider (120), by the user equipment (101), a script embedded in a web page, the script including an identification of the online content and instructions to set up the first session with the address of the payment system (130);
wherein the user equipment (101) connected to a/the public land mobile network (110) comprising a 5G core network is connected via the public land mobile network (110) to the web server (121); and
wherein the script, when executed on the user equipment (101), downloads information and further executable code from a payment server (133) of the payment system.

4. The method of claim 3,
wherein the script comprises information for accessing the online content that is only presented on the user equipment (101) if the payment system (130) determines that the online content has already been purchased, and otherwise presents purchase options on the user equipment (101); and
wherein when rendering the web page of the content provider (120) including the code, the user equipment will either immediately or after user interaction, establish a connection to the payment system (130) for download of the information and the further code.

5. The method of claim 3 or claim 4,
wherein the user equipment (101) receives a web session identification embedded in a web pages from a/the web server of the content provider and some of the downloaded information, such as content that provides access to pay content, is not immediately be presented to the user.

6. The method of any of the previous claims,
wherein a/the public land mobile network (110) is aware of the payment system, such as through a service level agreement between an operator of the public land mobile network (110) and an operator of the payment system (130); and
wherein the 5G core network has a policy storage data base (118) attached to the policy function (117) in which one or more policies related to the payment system are stored.

7. The method of any of the previous claims,
wherein step g) includes determining, by the payment system (130), if the user equipment (101) has paid for the online content based on the persistent ID and an ID of the online content, and:
if so, provide access to online content to the user equipment (101);
if not, provide at least one option to pay for the online content.

8. The method of any of the previous claims,
further comprising, in response to successful authentication in step f): allocating an IP address to the user equipment (101) for accessing the payment system (130);
provide the payment system (130) with the IP address of the user equipment (101);
storing, by the payment system (130), a map between the IP address and the persistent ID of the user equipment (101); and
wherein step g) further includes determining the persistent ID based on the IP address of the user equipment and the stored map.

9. The method of any of the previous claims,
wherein the persistent ID is a Generic Public Subscription Identifier, preferably a Mobile Station International Subscriber Directory Number.

10. The method of any of the previous claims,
further comprising:
storing, by the payment system (130), in response to successful completed payment of the online content, in the user equipment (101), a token or an identifier of completed purchase;
wherein the user equipment (101), in step a), provides the content provider (120) with the token or the identifier;
wherein the content provider (120) requests, from the payment system (130), authorization of the requested online content using the token or the identifier; and
wherein the content provider (120) allows access to the online content to the user equipment (102) in response to successful authorization.

11. The method of any of the previous claims,
wherein no further registration and/or credentials are required by the user equipment for accessing the content.

12. The method of any of the previous claims,
wherein step g) further includes determine an account of the user equipment based on the persistent ID; and
wherein step h) further includes monitoring the total payable debit of the account of the user equipment (101), and to request, after a predetermined time interval and/or on exceeding a predetermined value of total payable, settlement of at least part of the total payable.

13. A system comprising:
a user equipment (101) connected to a
a public land mobile network (110) including a policy function (117) and a core network managing functions (140),
a content provider (120) including server (121), such as a web server; and
a payment system (130) including an authentication server (131), such as an AAA server;
wherein the system is configured to perform the method of any one of the previous claims.

14. A computer program comprising instructions to cause a system, such as the system of claim 13, to execute the steps of the method of any one of the claims 1 to 12.

15. A computer-readable medium having stored thereon the computer program of claim 14.

## Amended claims

### Amended claims in accordance with Rule 137(2) EPC.

1. A method for providing paid access to online content, the method comprising:
a) sending, by a user equipment (101), a signal requesting the online content from a content provider (120), preferably a web server (121) of the content provider (120);
b) receiving, by the user equipment (101), a response signal with an address of a payment system (130); and
c) sending, by the user equipment, first session request signal, preferably a PDU session setup request signal, requesting a communication session, preferably a PDU session, with the payment system (130);
**characterized by**
d) determining, by a policy function (117), preferably by a Policy Control Function of a public land mobile network (110) of the user equipment (101), an address of an authentication server (131) based on the address of the payment system (130), the authentication server preferably being a secondary authentication server and/or an AAA server, preferably remote from the public land mobile network (110);
e) determining, by a core network managing function (140), a persistent ID of the user equipment (101) and providing the persistent ID to the authentication server (131) in a second session request signal (228), preferably in a SMF/AAA Session Request signal;
f) determining, by the authentication server (131), the authenticity of the user equipment (101) using the persistent ID;
g) determining, by the payment system (130), based on the persistent ID, a payment status of the user equipment (101) for the online content; and
h) enabling at least one user option, preferably via a first session established in response to the first session request signal, at the user equipment (101) for the online content, based on the payment status, preferably at least one option to gain access to the online content, to pay for the online content, and/or to donate money to the content provider (120).

2. The method of claim 1,
wherein step b) further includes receiving a security token by the user equipment (101) from the web server (121);
wherein step e) further includes providing the authentication server (131) with the security token as secondary authentication credentials; and
wherein step f) includes authenticate, by the authentication server (131), the content provider (120) and/or a/the web server (121), using the security token.

3. The method of claim 1 or claim 2,
wherein step b) includes receiving from a/the web server (121) of the content provider (120), by the user equipment (101), a script embedded in a web page, the script including an identification of the online content and instructions to set up the first session with the address of the payment system (130);
wherein the user equipment (101) connected to a/the public land mobile network (110) comprising a 5G core network is connected via the public land mobile network (110) to the web server (121); and
wherein the script, when executed on the user equipment (101), downloads information and further executable code from a payment server (133) of the payment system.

4. The method of claim 3,
wherein the script comprises information for accessing the online content that is only presented on the user equipment (101) if the payment system (130) determines that the online content has already been purchased, and otherwise presents purchase options on the user equipment (101); and
wherein when rendering the web page of the content provider (120) including the code, the user equipment will either immediately or after user interaction, establish a connection to the payment system (130) for download of the information and the further code.

5. The method of claim 3 or claim 4,
wherein the user equipment (101) receives a web session identification embedded in a web pages from a/the web server of the content provider and some of the downloaded information, such as content that provides access to pay content, is not immediately be presented to the user.

6. The method of any of the previous claims,
wherein a/the public land mobile network (110) is aware of the payment system, such as through a service level agreement between an operator of the public land mobile network (110) and an operator of the payment system (130); and
wherein the 5G core network has a policy storage data base (118) attached to the policy function (117) in which one or more policies related to the payment system are stored.

7. The method of any of the previous claims,
wherein step g) includes determining, by the payment system (130), if the user equipment (101) has paid for the online content based on the persistent ID and an ID of the online content, and:
if so, provide access to online content to the user equipment (101);
if not, provide at least one option to pay for the online content.

8. The method of any of the previous claims,
further comprising, in response to successful authentication in step f): allocating an IP address to the user equipment (101) for accessing the payment system (130);
provide the payment system (130) with the IP address of the user equipment (101);
storing, by the payment system (130), a map between the IP address and the persistent ID of the user equipment (101); and
wherein step g) further includes determining the persistent ID based on the IP address of the user equipment and the stored map.

9. The method of any of the previous claims,
wherein the persistent ID is a Generic Public Subscription Identifier, preferably a Mobile Station International Subscriber Directory Number.

10. The method of any of the previous claims,
further comprising:
storing, by the payment system (130), in response to successful completed payment of the online content, in the user equipment (101), a token or an identifier of completed purchase;
wherein the user equipment (101), in step a), provides the content provider (120) with the token or the identifier;
wherein the content provider (120) requests, from the payment system (130), authorization of the requested online content using the token or the identifier; and
wherein the content provider (120) allows access to the online content to the user equipment (102) in response to successful authorization.

11. The method of any of the previous claims,
wherein no further registration and/or credentials are required by the user equipment for accessing the content.

12. The method of any of the previous claims,
wherein step g) further includes determine an account of the user equipment based on the persistent ID; and
wherein step h) further includes monitoring the total payable debit of the account of the user equipment (101), and to request, after a predetermined time interval and/or on exceeding a predetermined value of total payable, settlement of at least part of the total payable.

13. A system comprising:
a user equipment (101) connected to a
a public land mobile network (110) including a policy function (117) and a core network managing functions (140),
a content provider (120) including server (121), such as a web server; and
a payment system (130) including an authentication server (131), such as an AAA server;
wherein the system is configured to perform the method of any one of the previous claims.

14. A computer program comprising instructions to cause a system, such as the system of claim 13, to execute the steps of the method of any one of the claims 1 to 12.

15. A computer-readable medium having stored thereon the computer program of claim 14.
